Europäisches Patentamt

European Patent Office

Office européen des brevets

(19)

(11) **EP 0 603 020 B1**

(12) **FASCICULE DE BREVET EUROPEEN**

(45) Date de publication et mention
de la délivrance du brevet:
**30.07.1997 Bulletin 1997/31**

(51) Int Cl.⁶: **G01V 3/10**, G01N 27/02

(21) Numéro de dépôt: **93402798.8**

(22) Date de dépôt: **17.11.1993**

(54) **Dispositif et méthode de caractérisation d'un milieu comportant au moins une partie conductrice**

Verfahren und Vorrichtung zur Charakterisierung eines Mediums, das zumindest einen leitfähigen Anteil enthält

Apparatus and method for the characterisation of a medium which contains at least one conductive part

(84) Etats contractants désignés:
**DE ES FR GB IT NL**

(30) Priorité: **15.12.1992 FR 9215112**

(43) Date de publication de la demande:
**22.06.1994 Bulletin 1994/25**

(73) Titulaire: **INSTITUT FRANCAIS DU PETROLE**
**92502 Rueil-Malmaison (FR)**

(72) Inventeurs:
• **Beauducel, Claude**
**F-60119 Henouville (FR)**
• **Frot, Didier**
**F-94600 Choisy le Roi (FR)**
• **Gonzalez, Pierre**
**F-92500 Rueil Malmaison (FR)**

(56) Documents cités:
EP-A- 0 393 359          FR-A- 2 319 115
US-A- 4 059 795          US-A- 4 367 440
US-A- 4 429 581

## Description

La présente invention concerne un dispositif et une méthode permettant à partir des pertes par courants de Foucault créés dans un milieu ou corps partiellement conducteur, d'obtenir au moins une caractéristique de ce milieu.

La présente invention trouve son application pour la caractérisation d'un milieu ou d'une partie d'un milieu possédant une faible valeur de conductivité, cette dernière se traduisant par de faibles valeurs de courants de Foucault.

L'application s'applique, en particulier, en production où l'on cherche généralement à caractériser les phases contenues dans un effluent comportant, par exemple, une phase aqueuse faiblement conductrice, une phase organique et une phase gazeuse.

On peut ainsi l'appliquer à la détermination des quantités ou des débits des composants des hydrocarbures constituant ces trois phases distinctes contenues dans un même volume, ces mesures étant généralement difficiles à obtenir en continu.

L'invention s'applique, en particulier, en production pétrolière où l'on cherche généralement à connaître les quantités ou les débits des composants des hydrocarbures contenus dans un même volume, ces composants constituant trois phases distinctes difficiles à analyser en continu.

Cette invention trouve plus particulièrement son application dans le cadre de la déshydratation des bruts, de la protection de l'environnement ou de la gestion de stockage des bruts.

L'invention permet aussi, dans le cas de la gestion de stockage des fluides, de suivre la dynamique de séparation des phases constituantes d'un fluide contenues dans un même volume, l'une des phases étant conductrice, et en particulier, d'obtenir la durée de décantation du fluide.

L'invention peut aussi servir à la connaissance du niveau ou du volume de la phase conductrice d'un fluide, notamment pour une phase conductrice liquide, le fluide étant contenu dans un volume déterminé ou en écoulement dans une conduite.

Les techniques habituellement utilisées pour détecter une caractéristique d'un milieu conducteur représentative de sa conductivité font appel à des moyens capacitifs et présentent, de fait, l'inconvénient d'être intrusives.

On connaît par le brevet US-4.717.600 un dispositif qui permet d'obtenir une information sur la nature des pièces de monnaie en observant la décroissance des courants de Foucault créés par un champ magnétique variable. Ce dispositif fonctionne en envoyant des successions d'impulsions de tension de valeur constante dans une bobine ou inductance de façon continue et en observant la durée de relaxation du système excité. Il ne permet donc pas de déterminer en continu la nature des pièces de monnaie.

De plus le caractère non uniforme du champ magnétique créé à l'extrémité de l'inductance rend imprécise et difficile l'analyse quantitative des dissipations dues aux courants de Foucault.

Le brevet US-4,059,795 décrit un dispositif permettant de déterminer des caractéristiques métallurgiques d'un matériau conducteur. On soumet le matériau conducteur à un champ magnétique, par exemple en le positionnant dans le voisinage d'un circuit résonnant inductif excité, et on analyse la largeur et le décalage du signal rectangulaire du signal de sortie.

Le brevet US-4,367,440 enseigne de mesurer la quantité d'eau salée comprise dans un mélange d'huile et d'eau, en utilisant des moyens inductifs ayant une fonction d'émetteur ou de récepteur.

Le dispositif et la méthode selon l'invention permettent de caractériser au moins une partie faiblement conductrice d'un milieu composé de plusieurs phases de conductivité différentes, en s'affranchissant d'éventuelles perturbations parasites dues au milieu extérieur.

Dans l'invention décrite ci-après, on utilise le fait qu'un milieu ou corps partiellement conducteur, placé à proximité d'un moyen inductif tel qu'une bobine parcourue par un courant alternatif, est le siège de courants induits ou courants de Foucault qui se traduisent par des pertes au niveau du rendement, c'est-à-dire par une diminution de la valeur du facteur de surtension du circuit résonnant activé dans lequel la bobine est incluse, et notamment de la variation d'amplitude de la tension prise aux bornes de la bobine.

Ainsi, la méthode selon l'invention permet, à partir de la variation d'amplitude de l'enveloppe du signal mesurée aux bornes de la bobine de déduire directement une caractéristique du corps partiellement conducteur.

La présente invention concerne une méthode pour obtenir une caractéristique d'un milieu ou d'un corps comportant au moins une partie conductrice. Elle est caractérisée en ce que :

- l'on utilise un circuit inductif résonnant excité par un signal périodique d'excitation dont la valeur de fréquence est choisie sensiblement égale à la valeur de fréquence d'accord du circuit résonnant ou pulsation propre du circuit,
- l'on mesure uniquement la variation de l'amplitude du signal mesuré aux bornes dudit circuit inductif résonnant excité, et
- à partir de la mesure de la variation d'amplitude, on détecte la présence dudit corps partiellement conducteur.

Elle se caractérise également en ce que :

- l'on utilise un circuit inductif résonnant excité par un signal périodique d'excitation dont la valeur de fréquence est choisie sensiblement égale à la valeur de fréquence d'accord du circuit résonnant ou pulsation propre du circuit,

- l'on mesure uniquement la variation de l'amplitude du signal mesuré aux bornes dudit circuit inductif résonnant excité, et
- à partir de la mesure de la variation d'amplitude, on détecte la présence dudit corps partiellement conducteur,
- à partir de la mesure de la variation de l'amplitude du signal mesuré, on détecte une caractéristique du corps composant au moins une partie conductrice.

Le signal périodique d'excitation peut être un signal permanent.

Le signal périodique d'excitation est constitué de trains d'impulsions de durées connues.

Lorsque le corps est un fluide comprenant une phase conductrice de volume connu et une phase non conductrice, on peut déterminer la conductivité moyenne de la phase conductrice.

Lorsque le corps est un fluide composé d'au moins une phase conductrice de conductivité connue et d'au moins une phase non conductrice on peut déterminer le volume de la phase conductrice dudit fluide.

Pour un fluide composé de plusieurs phases dont l'une au moins est conductrice, ledit fluide étant en écoulement dans une conduite passant au moins en partie au voisinage du circuit inductif, on peut déterminer, par exemple, le débit massique de la phase conductrice.

Lorsque les phases ont des vitesses d'écoulement sensiblement identiques, on peut alors déterminer le débit volumique du fluide.

Lorsque le corps est un fluide de volume connu, contenu dans un récipient au moins une partie du fluide passant au voisinage du circuit inductif, ledit fluide comprenant au moins deux phases liquides, l'une des deux phases étant une phase conductrice, on peut déterminer le niveau de la phase conductrice dudit fluide dans le récipient.

Lorsque le corps est un fluide composé de deux phases liquides en émulsion, le fluide étant situé au moins en partie au voisinage du circuit inductif, on peut déterminer le temps de décantation du fluide, c'est-à-dire, le temps écoulé entre le moment où le fluide est en émulsion totale et le moment où les phases liquides constituant le fluide sont séparées.

La présente invention concerne un dispositif pour la mise en oeuvre de la méthode selon l'invention. Il comporte en combinaison des moyens inductifs, des moyens de génération d'un signal périodique d'excitation propre à créer dans les moyens inductifs émetteurs-récepteurs une surtension, des moyens de mesure de la variation de l'amplitude du signal mesuré aux bornes des moyens inductifs due à la présence d'un corps partiellement conducteur placé à proximité des moyens inductifs, et des moyens de traitement pour déterminer directement à partir de ladite variation de l'amplitude du signal une caractéristique du corps partiellement conducteur.

Le corps est, par exemple, placé à l'intérieur des moyens inductifs.

Les moyens inductifs peuvent comporter une bobine émettrice-réceptrice.

La bobine émettrice-réceptrice comporte, par exemple, un double bobinage de façon à générer un champ électromagnétique uniforme à l'intérieur de la bobine.

On peut appliquer la méthode à la caractérisation d'un effluent pétrolier composé d'au moins une phase conductrice et une phase non conductrice, la phase conductrice pouvant être une phase aqueuse, telle de l'eau plus ou moins salée.

Le dispositif et la méthode selon l'invention présentent l'avantage d'être plus simples et moins coûteux du fait que l'on ne fait appel qu'à une seule bobine fonctionnant en émetteur-récepteur.

La géométrie retenue préférentiellement pour le dispositif qui consiste à positionner le milieu analysé à l'intérieur de la bobine permet de plus une analyse qualitative du milieu que l'on désire caractériser puisque le champ magnétique créé est homogène, c'est-à-dire que les lignes de champ utilisées pour analyser le milieu sont réparties régulièrement autour de la bobine.

D'autres avantages et caractéristiques de l'invention apparaîtront à la lecture de la description suivante de modes de réalisation donnés à titres d'exemples non limitatifs et en référence aux dessins annexés dans lesquels :

- La figure 1 montre un schéma de dispositif selon l'invention comportant un moyen inductif unique;
- La figure 2 schématise un exemple de réalisation de circuit comprenant la partie inductive selon l'invention, des moyens de génération de courants, des moyens de mesure de l'amplitude de l'enveloppe du signal et des moyens d'asservissement de la fréquence d'accord;
- La figure 3 représente un dispositif selon l'invention adapté pour déterminer le volume de la phase conductrice d'un fluide;
- Les figures 4A, 4B, 4C et 4D montrent schématiquement des courbes expérimentales permettant d'obtenir le volume de la phase conductrice et la vitesse des particules;
- La figure 5 montre un dispositif permettant de d'effectuer un suivi de niveau de la phase conductrice d'un fluide;
- La figure 6 représente des courbes obtenues lors du suivi de niveau d'un fluide;
- La figure 7 représente un dispositif selon l'invention adapté au suivi de la décantation d'un fluide en émulsion; et
- La figure 8 montre des courbes expérimentales obtenues lors du suivi de la décantation d'un fluide.

Dans la suite de la description, on définit en tant que corps ou milieu partiellement conducteur un corps ou milieu comportant au moins une partie ou phase conductrice.

La description qui suit concerne plus particulièrement, mais de manière non limitative, un corps constitué d'un milieu fluide comportant au moins une phase aqueuse telle que de l'eau ayant une faible valeur de conductivité et une phase organique non conductrice, par exemple de l'huile, lorsque le fluide est un hydrocarbure ou effluent pétrolier.

Dans l'invention décrite ci-après, on utilise le fait qu'un milieu ou corps partiellement conducteur, placé à proximité d'un moyen inductif tel qu'une bobine parcourue par un courant alternatif, est le siège de courants induits ou courants de Foucault qui se traduisent par des pertes au niveau du rendement, c'est-à-dire par une diminution de la valeur du facteur de surtension, du circuit résonnant activé dans lequel la bobine est incluse.

La méthode selon l'invention permet, à partir de la variation du facteur de surtension du circuit résonnant activé, de déduire une caractéristique du corps partiellement conducteur.

Ainsi, le facteur de surtension varie de façon inverse à la valeur de conductivité d'un corps ou d'un milieu, c'est-à-dire à la quantité de la partie ou de la phase conductrice du milieu.

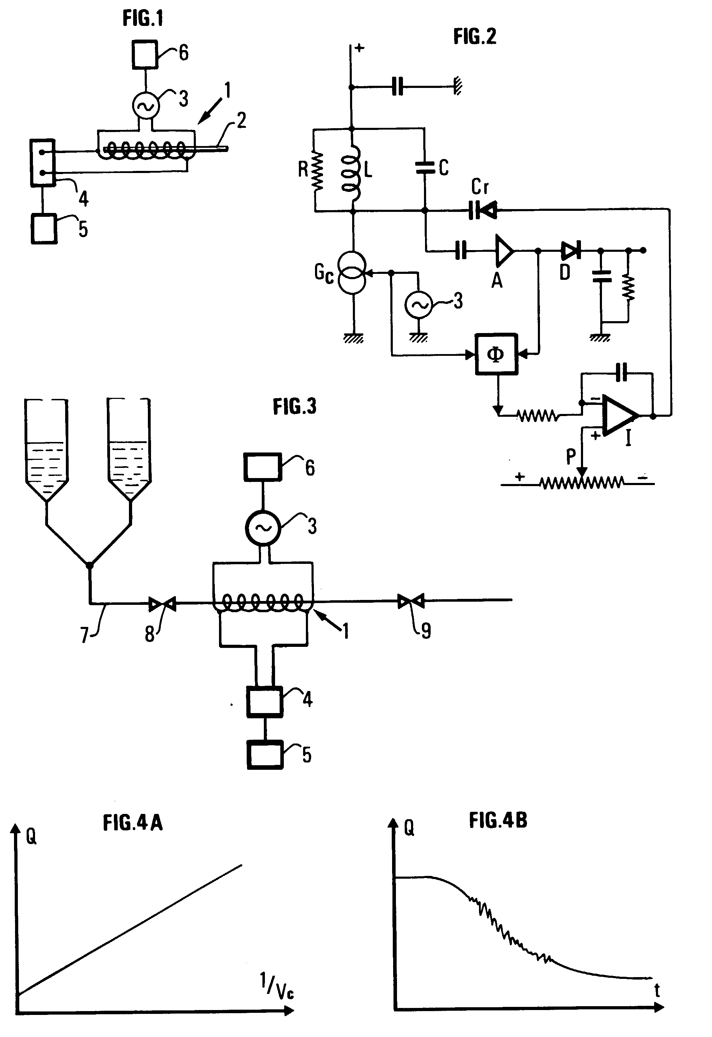

Le dispositif de mise en oeuvre de la méthode comporte, (Fig.1) un circuit inductif comprenant une bobine inductive 1, dans laquelle on place, par exemple, un corps partiellement conducteur 2.

Un générateur de signal 3 permet d'envoyer à la bobine 1 un signal périodique d'excitation, un signal alternatif par exemple, qui engendre dans la bobine 1 un courant périodique, ce dernier générant à l'intérieur du corps 2 des courants de Foucault. Des moyens de mesure 4 connectés à la bobine 1, détectent la variation d'amplitude de l'enveloppe du signal alternatif pris aux bornes de la bobine 1 et détectent la variation du facteur de surtension du circuit résonnant activé et transmettent un signal représentatif de cette variation à des moyens de traitement 5, tel qu'un processeur programmable qui permet d'obtenir directement à partir du signal mesuré une caractéristique du corps partiellement conducteur.

Le corps conducteur 2 ayant une partie conductrice est, de préférence, positionné à l'intérieur de la bobine de manière à effectuer les mesures avec un champ homogène, dû aux lignes de champ internes à la bobine.

Dans toute la suite du texte, on définira par le terme "circuit résonnant", le circuit électronique constitué par le générateur 3, la bobine inductive et éventuellement d'autres éléments placés dans le circuit.

Le dispositif comporte aussi un dispositif de contrôle 6 du générateur de signal 3, qui permet de choisir les paramètres du signal alternatif envoyé dans la bobine 1.

Le dispositif comporte en plus des moyens de mesure 4, un dispositif d'asservissement (Fig. 2) qui permet de choisir la fréquence pour laquelle les mesures de variation d'amplitude sont effectuées. Dans un mode de réalisation préférentiel, la valeur de la fréquence de travail est choisie pour que la fréquence d'accord du circuit résonnant soit comprise dans un intervalle centré sur la valeur fo de la fréquence du générateur. L'intervalle est de préférence égal à :

$$fo \pm fo/Q,$$

fo = fréquence du générateur,
Q = coefficient de surtension.

La fréquence d'accord correspond notamment à la pulsation propre du circuit.

Ainsi, le dispositif d'asservissement sert, notamment, à régler la valeur de la fréquence d'accord du circuit pour qu'elle soit sensiblement égale à la fréquence du générateur.

Afin d'améliorer la précision de mesure, on choisit les paramètres de la bobine 1, c'est-à-dire son coefficient de self-induction L, sa valeur capacitive C et sa résistance r de manière à avoir une valeur de rapport (L/r) la plus élevée possible.

Afin d'obtenir un champ électromagnétique constant à l'intérieur de la bobine, on réalise la bobine, de préférence, en employant une technique de bobinage à double enroulement bien connue des spécialistes du domaine.

La figure 2 schématise un exemple de montage possible pour les éléments inductifs et les différents éléments constituant le circuit résonnant, les moyens d'asservissement et de mesure.

La résistance R de la figure schématise les valeurs de résistance de la bobine 1 et des résistances générées par les pertes dues aux courants de Foucault dans le corps conducteur.

Les paramètres L et C représentent respectivement le coefficient de self-induction de la bobine et sa capacité parasite.

La référence $C_r$ représente une capacité variable qui permet de d'adapter la fréquence de résonance du circuit à la fréquence du signal appliqué par le générateur.

Un générateur de signal 3 commande un générateur de courant GC relié à la bobine. La mise en série du générateur avec la résistance R permet de négliger la valeur de la résistance interne du générateur 3 par rapport à la résistance R partiellement représentative de la mesure des pertes générées dans le corps par les courants de Foucault.

Le dispositif de mesure 4 de l'amplitude de l'enveloppe du signal alternatif pris aux bornes du circuit résonnant comporte par exemple, un adaptateur-suiveur A une diode de redressement D, la diode étant suivie d'un circuit permettant la mise en forme du signal et plus particulièrement d'établir une valeur moyenne ou encore appelée valeur d'enveloppe des signaux redressés par la diode. L'agencement de tels éléments est connu des spécialistes.

Les moyens d'asservissement de la fréquence d'accord du circuit résonnant comportent un comparateur de phase φ relié d'une part au générateur de courant GC délivrant le courant d'excitation à la bobine et d'autre part à la sortie de l'adaptateur-suiveur A par des liaisons électriques classiques. Le comparateur de phase φ délivre une tension proportionnelle à la différence de phase existant entre le courant injecté dans le circuit résonnant et la phase de la tension du signal mesuré. Un intégrateur I placé après le comparateur de phase φ et relié à la capacité variable $C_r$ intègre la différence de phase et commande cette capacité $C_r$ pour déterminer la fréquence d'accord de manière à ce que sa valeur soit sensiblement égale à la valeur de fréquence du générateur.

Cette commande s'ajuste automatiquement pour que la tension de sortie du comparateur de phase soit sensiblement égale à une valeur de consigne imposée par le réglage d'un potentiomètre. Cette valeur de consigne correspond à la valeur de la fréquence à laquelle on souhaite suivre l'évolution de la variation de l'amplitude du signal représentative de la variation de conductivité du corps ou milieu analysé. Cette valeur de consigne est fixée de préférence par rapport à la valeur de sortie du comparateur de phase correspondant à une phase nulle.

Un tel mode de réalisation est bien adapté pour déterminer une partie faiblement conductrice d'un corps qui est donc le siège de faibles valeurs de courants de Foucault qui se traduisent par de faibles dissipations d'énergie. En effet, les variations de la quantité de phase conductrice se traduisant alors par de faibles variations du coefficient de surtension, il est préférable de choisir une valeur de fréquence élevée. La capacité d'accord possède ainsi une valeur faible qui est plus facilement perturbée par d'éventuels phénomènes parasites extérieurs. Afin de s'affranchir de ces phénomènes parasites, on asservit, à l'aide des moyens précédemment décrits, la fréquence d'accord du circuit. Cette manière de procéder permet d'obtenir des mesures représentatives uniquement des dissipations générées par les courants de Foucault et donc de suivre la façon dont varie la partie conductrice présente dans le milieu analysé par une mesure de la variation d'amplitude, plus particulièrement obtenue par la mesure d'amplitude de l'enveloppe du signal pris aux bornes de l'élément inductif.

Avec le mode de réalisation de la Fig. 3, on peut déterminer la quantité ou volume de la phase conductrice d'un fluide, le fluide étant, par exemple, en écoulement dans une conduite et passant au moins en partie dans les moyens inductifs.

On procède de la manière suivante : on fait s'écouler le fluide dans une conduite 7 contrôlée par deux vannes 8, 9, l'une située en amont et l'autre en aval du dispositif, et on active le circuit résonnant selon la méthode décrite en rapport avec la figure 1. On mesure la variation du facteur de surtension Q en fonction du temps. Le signal représentatif de cette mesure est envoyé dans le processeur 5 qui l'analyse pour déduire, par exemple le volume ou la quantité d'eau constituant la phase conductrice du fluide en écoulement. Lorsque l'on analyse un fluide diphasique de volume connu, on peut aussi obtenir le volume de la phase non conductrice.

L'interprétation de la courbe obtenue en relevant les variations du facteur de surtension est faite, par le processeur 5 qui est programmé pour réaliser les opérations suivantes:

Il compare la forme générale de la courbe avec des courbes telles que celles de la Fig. 4A par exemple, préalablement mémorisées dans une mémoire. Ces courbes de référence sont obtenues à partir d'essais préalables de calibration de la bobine au cours desquels on a fait s'écouler dans une conduite un fluide de composition contrôlée, c'est-à-dire dont on connaît à tout instant la proportion des volumes de phase conductrice et de phase non conductrice et pour lequel, on a relevé les variations du facteur de surtension Q associées à des changements de la proportion de la phase conductrice. Par comparaison, avec ces courbes mémorisées, on en déduit le volume de la phase conductrice $V_c$ à tout instant dans le fluide en écoulement dans la conduite 7. On peut aussi, connaissant la quantité totale du fluide ayant circulé dans la conduite, obtenir le volume de la phase non conductrice.

Une autre façon d'interpréter les résultats consiste lorsque l'on connaît la valeur moyenne de la conductivité d'un fluide, à déduire le volume de la phase ou partie conductrice du fluide circulant dans la conduite 7 à partir de la relation connue reliant la valeur de surtension U du circuit résonnant activé, avec la conductivité σ et le volume V de la phase conductrice : U ~ (1/σV).

De façon inverse, lorsque l'on connaît le volume de la phase conductrice du fluide analysé, le processeur 5 peut aussi calculer à partir des données enregistrées du facteur de surtension, la valeur de la conductivité moyenne de la phase ou partie conductrice du fluide.

La quantité totale ou volume total du fluide ayant circulé dans la conduite pendant un temps donné est obtenue, par exemple, par intégration de la fonction représentative de la courbe (Fig 4A) comme il est bien connu de l'homme de métier.

La méthode selon l'invention permet aussi d'obtenir une information complémentaire sur la vitesse des particules conductrices. Le mot particule s'applique aussi bien pour les gouttelettes d'une des phases lorsque le fluide est en émulsion que pour des particules solides.

On exploite pour celà les irrégularités de la pente de la courbe (FIG. 4B). Cette courbe a été obtenue par mesure en fonction du temps du facteur de surtension Q pour un fluide diphasique composé d'eau pour sa phase conductrice et d'huile pour sa phase non conductrice. Sur cette courbe, on distingue deux plages constantes séparées par une pente présentant des irrégularités. La valeur de la pente est représentative de l'évolution de la structure du fluide, c'est-à-dire de la façon dont varient les quantités de phase conductrice et de phases non conductrices présentes dans le fluide, le palier situé sur la gauche de la courbe caractérisant le facteur de surtension Q lorsque le fluide comporte 100% d'eau ou phase conductrice et le palier de droite 100% d'huile ou phase non conductrice.

Ainsi, pour un fluide comportant des particules conductrices dans un milieu peu conducteur, le spectre des vitesses des particules ou gouttelettes est obtenu par analyse de la fonction A(t) d'autocorrélation de la partie de la courbe présentant des irrégularités et de la connaissance de la concentration moyenne des particules contenues dans le fluide en écoulement.

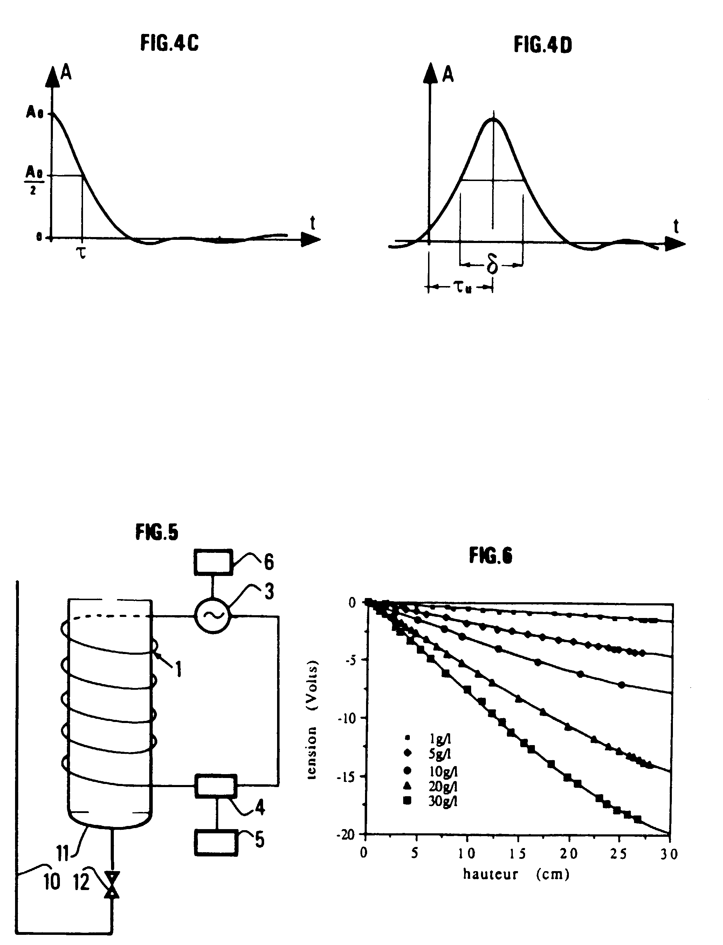

La figure 4C représente en fonction du temps, la fonction d'autocorrélation de la courbe Q(t) obtenue à partir de mesures effectuées sur un fluide dont la phase conductrice est de l'eau et la phase non conductrice de l'huile. Ainsi, la valeur du temps $\tau$ mesurée, par exemple, pour une amplitude à mi-hauteur de la courbe est proportionnelle au produit de la concentration moyenne des particules et de l'inverse de la vitesse des particules.

Lorsque la concentration moyenne des particules n'est pas connue, on peut lever l'ambiguïté en utilisant deux bobines situées à une distance connue l'une de l'autre.

Le principe consiste à mesurer le signal obtenu dans la première bobine, puis le signal au niveau de la deuxième bobine, et ensuite d'effectuer une intercorrélation des deux signaux précédemment obtenus.

La figure 4D représente une courbe obtenue de cette façon. L'amplitude relative maximale est décalée temporellement d'une valeur $\tau_d$ qui est directement proportionnelle à la vitesse des particules conductrices.

La largeur $\delta$ prise à mi-hauteur, par exemple, du signal donne une indication sur la concentration moyenne des particules.

A partir de la vitesse des particules de la phase conductrice, le processeur 5 déduit le débit massique de la phase conductrice circulant dans la conduite 7 dont la section connue, par la relation bien connue débit = vitesse X surface.

Lorsque le fluide est composé de plusieurs phases dont l'une au moins est une phase conductrice, et quand les phases ne présentent pas de contraste de viscosité importante, c'est-à-dire quand leurs vitesses d'écoulement sont sensiblement égales, la mesure de la vitesse des particules est alors considérée comme représentative de la vitesse des différentes phases contenues dans le fluide. Le processeur 5 peut calculer la valeur du débit total du fluide circulant dans la conduite 7.

La figure 5 décrit un dispositif de géométrie donnée, à partir duquel on détermine le niveau de la phase conductrice d'un fluide passant au moins en partie dans la bobine constituant les moyens inductifs du circuit résonnant.

Le fluide comportant de l'eau et de l'huile arrive par une conduite 10 et passe dans une colonne 11 par exemple placée à l'intérieur de la bobine de mesure 1.

Un dispositif de réglage 12, telle qu'une vanne permet de contrôler le débit du fluide passant dans la colonne 11. On applique un signal alternatif d'excitation à la bobine 1, de fréquence égale de préférence à la fréquence de résonance du circuit. A partir du moment où le signal est appliqué, on enregistre à l'aide des moyens de mesure 4 (Fig. 2), la valeur du coefficient de surtension du circuit. Ces données sont ensuite transmises au processeur 5. On effectue la mesure, par exemple, en continu.

On effectue un suivi de niveau de la phase conductrice en enregistrant la variation du facteur de surtension Q résultant de la variation de la quantité de phase conductrice dans la partie située dans les moyens inductifs. Les pertes dues aux courants de Foucault dans la partie conductrice et qui sont représentatives de la quantité de phase conductrice présente dans le fluide, se traduisent par une variation du facteur de surtension.

A partir des données, on obtient la valeur du niveau de l'eau contenue dans le fluide par exemple en effectuant une comparaison avec un réseau de courbes expérimentales de référence obtenues préalablement.

Ces courbes peuvent être obtenues par exemple en réalisant dans la colonne 11 un mélange d'une phase conductrice, une saumure faite d'eau additionnée de chlorure de sodium par exemple, et d'une phase non conductrice, de l'huile par exemple, et en mesurant les variations du coefficient de surtension Q de la bobine 1 pour différentes proportions d'huile et d'eau et différentes concentrations de chlorure.

Les différents tracés C1, C2, C3, C4, C5 des courbes expérimentales de la figure 6 correspondent à des valeurs de salinité variables de fluides. Ainsi les courbes C1, C2, C3, C4, C5 correspondent respectivement à des valeurs de salinité de 1g/l, 5g/l, 10g/l, 20g/l, 30g/l. A partir des données enregistrées, des paramètres de l'eau analysée notamment la salinité de l'eau et des courbes de référence, le processeur 5 déduit par comparaison le niveau d'eau contenue dans la colonne 11 pour une valeur de surtension $Q_o$ mesurée.

Des essais ont montré que le dispositif avait une sensibilité de mesure de l'ordre de 1 %.

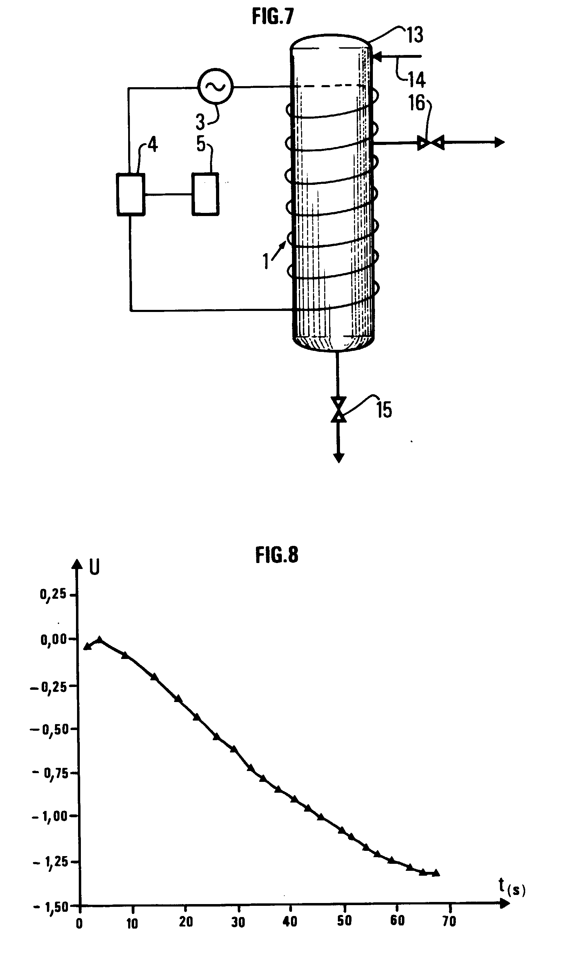

Le mode de réalisation, de la figure 7, est particulièrement bien adapté pour effectuer un suivi de la séparation des phases d'un fluide, dont au moins l'une des phases est une phase conductrice. Cette opération est aussi appelée décantation d'un fluide. Ce mode de réalisation est notamment utilisé pour caractériser un fluide se présentant sous forme d'émulsion par exemple, une émulsion d'huile dans l'eau, où des gouttelettes d'huile sont dispersées dans l'eau.

Le dispositif comporte une capacité 13 située de préférence à l'intérieur d'une bobine de mesure 1 reliée à un appareillage de commande et de traitement 3, 4, 5 analogue à celui de la Figure 5. La capacité 13 est pourvue d'une conduite d'arrivée 14 d'introduction de l'émulsion, de moyens de soutirage 15 de l'eau et de moyens 16 de soutirage de l'huile.

Le circuit est excité et les signaux de mesure sont mémorisés dans le processeur 5. A partir des valeurs enregistrées, le processeur 5 établit, par exemple, la courbe d'évolution de la surtension U en fonction du temps, ainsi que les variations de sa pente, et il en déduit le temps ou durée de décantation du fluide en émulsion, à l'issue duquel les deux phases, l'eau et l'huile dans notre exemple, sont pratiquement séparées.

La figure 8 est un exemple de courbe expérimentale obtenue lors d'essais de décantation réalisés pour un fluide en émulsion composé de 38% de dodécane et 62% de saumure. On peut aussi déduire de la pente prise à mi-hauteur par exemple, l'indice de stabilité du fluide en décantation.

On ne sortirait pas du cadre de l'invention si l'on appliquait cette méthode à un milieu tel qu'un fluide dans lequel la phase non conductrice est de l'air ou tout autre phase non conductrice.

On n'en sortirait pas non plus en modifiant la position de la bobine d'excitation par rapport à l'enceinte. Elle pourra être placée aussi bien à l'intérieur d'une enceinte contenant le fluide à analyser qu'à l'extérieur et à proximité de celle-ci.

Bien entendu, diverses modifications et/ou adjonctions peuvent être apportées par l'homme de métier au procédé et au dispositif dont la description vient d'être donnée à titre nullement limitatif, sans sortir du cadre de l'invention.

## Revendications

1.  Méthode pour obtenir une caractéristique d'un milieu ou d'un corps comportant au moins une partie conductrice caractérisée en ce que :

    *   on utilise un circuit inductif résonnant émetteur-récepteur excité par un signal périodique d'excitation dont la valeur de fréquence est choisie sensiblement égale à la valeur de fréquence d'accord du circuit résonnant ou pulsation propre du circuit,
    *   on mesure uniquement la variation de l'amplitude du signal mesuré aux bornes dudit circuit inductif résonnant excité, et
    *   à partir de la mesure de la variation d'amplitude, on détecte la présence dudit corps partiellement conducteur.

2.  Méthode pour obtenir une caractéristique d'un milieu ou corps comportant au moins une partie conductrice, caractérisé en ce que :

    *   on utilise un circuit inductif résonnant émetteur-récepteur excité par un signal périodique d'excitation dont la valeur de fréquence est choisie sensiblement égale à la valeur de fréquence d'accord du circuit résonnant ou pulsation propre du circuit,

    *   on mesure uniquement la variation de l'amplitude du signal mesuré aux bornes dudit circuit inductif résonnant excité, et
    *   à partir de la mesure de la variation d'amplitude, on détecte la présence dudit corps partiellement conducteur,
    *   à partir de la mesure de la variation de l'amplitude du signal mesuré, on détecte une caractéristique du corps comportant au moins une partie conductrice.

3.  Méthode selon la revendication 2, caractérisée en ce que le signal périodique d'excitation appliqué est un signal permanent.

4.  Méthode selon la revendication 2, caractérisée en ce que le signal périodique d'excitation appliqué est constitué de trains d'impulsions de durées connues.

5.  Méthode selon la revendication 2, appliqué à un corps tel qu'un fluide, composé d'une phase conductrice de volume connu et d'une phase non conductrice, caractérisée en ce que l'on détermine la conductivité moyenne de la phase conductrice.

6.  Méthode selon la revendication 2, appliqué à un corps tel qu'un fluide, composé au moins d'une phase conductrice de conductivité connue et au moins d'une phase non conductrice, caractérisée en ce que l'on détermine au moins le volume de la phase conductrice dudit fluide.

7.  Méthode selon la revendication 2, appliquée à un fluide composé de plusieurs phases dont l'une au moins est conductrice, ledit fluide étant en écoulement dans une conduite passant au moins en partie au voisinage du circuit inductif, caractérisée en ce que l'on détermine le débit massique de la phase conductrice.

8.  Méthode selon la revendication 7, caractérisée en ce que lesdites phases du fluide ayant des vitesses d'écoulement sensiblement identiques, on détermine le débit volumique du fluide.

9.  Méthode selon la revendication 2, caractérisée en ce que le corps étant un fluide de volume connu contenu dans un récipient, au moins une partie du fluide passant au voisinage dudit circuit inductif, ledit fluide comprenant au moins deux phases liquides et l'une des deux phases étant une phase conductrice, on détermine le niveau dans le récipient de la phase conductrice dudit fluide.

10. Méthode selon la revendication 2, caractérisée en ce que le corps étant un fluide composé de deux phases liquides en émulsion et le fluide étant situé au moins en partie au voisinage dudit circuit inductif, on détermine le temps de décantation du fluide.

11. Dispositif pour la mise en oeuvre de la méthode selon l'une des revendications précédentes caractérisé en ce qu'il comporte en combinaison des moyens inductifs résonnant, des moyens de génération d'un signal périodique d'excitation propre à créer dans les moyens inductifs émetteurs-récepteurs une surtension, des moyens de mesure de la variation de l'amplitude du signal mesuré aux bornes des moyens inductifs due à la présence d'un corps partiellement conducteur placé à proximité des moyens inductifs, et des moyens de traitement pour déterminer directement à partir de ladite variation de l'amplitude du signal une caractéristique du corps partiellement conducteur.

12. Dispositif selon la revendication 11, caractérisé en ce que ledit corps est placé à l'intérieur des moyens inductifs.

13. Dispositif selon la revendication 11, caractérisé en ce que les moyens inductifs (1) comportent une bobine émettrice-réceptrice.

14. Dispositif selon la revendication 11, caractérisée en ce que la bobine émettrice-réceptrice comporte un double bobinage permettant de générer un champ électromagnétique uniforme à l'intérieur de ladite bobine.

15. Application selon l'une des revendications précédentes à la caractérisation d'un effluent pétrolier composé d'au moins une phase conductrice telle qu'une phase aqueuse et d'une phase non conductrice.

**Patentansprüche**

1. Verfahren zum Erhalt einer Charakteristik eines Milieus oder eines Körpers, der wenigstens einen leitfähigen Teil umfaßt, dadurch gekennzeichnet, daß:

   . man einen induktiven Sender-Empfänger-Schwingkreis verwendet, der durch ein periodisches Anregungssignal angeregt wird, dessen Frequenzwert im wesentlichen gleich dem übereinstimmenden Frequenzwert des Schwingkreises oder einer Eigenfrequenz des Kreises gewählt wird,
   . man die Veränderung der Amplitude des Signales, das an den Anschlußklemmen des angeregten, induktiven Schwingkreises gemessen wird, eindeutig mißt, und
   . man auf der Grundlage der Messung der Veränderung der Amplitude die Anwesenheit des teilweise leitfähigen Körpers erfaßt.

2. Verfahren zum Erhalt einer Charakteristik eines Milieus oder eines Körpers, der wenigstens einen leitfähigen Teil umfaßt, dadurch gekennzeichnet, daß:

   . man einen induktiven Sender-Empfänger-Schwingkreis verwendet, der durch ein periodisches Anregungssignal angeregt wird, dessen Frequenzwert im wesentlichen gleich dem übereinstimmenden Frequenzwert des Schwingkreises oder einer Eigenfrequenz des Kreises gewählt wird,
   . man die Veränderung der Amplitude des Signales, das an den Anschlußklemmen des angeregten, induktiven Schwingkreises gemessen wird, eindeutig mißt, und
   . man auf der Grundlage der Messung der Veränderung der Amplitude die Anwesenheit des teilweise leitfähigen Körpers erfaßt,
   . man auf der Grundlage der Messung der Veränderung der Amplitude des gemessenen Signales eine Charakteristik des Körpers, der wenigstens einen leitfähigen Teil umfaßt, ermittelt.

3. Verfahren nach Anspruch 2, dadurch gekennzeichnet, daß das angelegte periodische Anregungssignal ein Dauersignal ist.

4. Verfahren nach Anspruch 2, dadurch gekennzeichnet, daß das angelegte periodische Anregungssignal aus Pulsfolgen bekannter Dauer gebildet wird.

5. Verfahren nach Anspruch 2, das bei einem Körper, wie einem Fluid, verwendet wird, welches aus einer leitfähigen Phase von bekanntem Volumen und einer nicht-leitfähigen Phase zusammengesetzt ist, dadurch gekennzeichnet, daß man die mittlere Leitfähigkeit der leitfähigen Phase bestimmt.

6. Verfahren nach Anspruch 2, das bei einem Körper, wie einem Fluid, verwendet wird, welches wenigstens aus einer leitfähigen Phase bekannter Leitfähigkeit und wenigstens aus einer nicht-leitfähigen Phase zusammengesetzt ist, dadurch gekennzeichnet, daß man wenigstens das Volumen der leitfähigen Phase des Fluids bestimmt.

7. Verfahren nach Anspruch 2, das bei einem Fluid verwendet wird, welches aus mehreren Phasen zusammengesetzt ist, deren eine wenigstens leitfähig ist, wobei sich das Fluid in einer Leitung, die wenigstens zum Teil in Nähe des induktiven Kreises vorbeiführt, in Strömung befindet, dadurch gekennzeichnet, daß man den Massendurchsatz des leitfähigen Fluids bestimmt.

8. Verfahren nach Anspruch 7, dadurch gekennzeichnet, daß man den Volumendurchsatz des Fluids bestimmt, wobei die Phasen des Fluids im wesentlichen identische Strömungsgeschwindigkeiten aufweisen.

9. Verfahren nach Anspruch 2, dadurch gekennzeichnet, daß man das Niveau in dem Behälter der leitfähigen Phase des Fluids bestimmt, wobei der Körper ein in einem Behälter enthaltenes Fluid von bekanntem Volumen ist, wenigstens ein Teil des Fluids in Nähe des induktiven Kreises strömt, das Fluid wenigstens zwei Flüssigphasen umfaßt und die eine der zwei Phasen eine leitfähige Phase ist.

10. Verfahren nach Anspruch 2, dadurch gekennzeichnet, daß man die Zeit zum Dekantieren des Fluids bestimmt, wobei der Körper ein Fluid ist, das aus zwei Flüssigphasen in Emulsion zusammengesetzt ist und das Fluid wenigstens teilweise in Nähe des induktiven Kreises gelegen ist.

11. Vorrichtung zur Durchführung des Verfahrens nach einem der vorhergehenden Ansprüche, dadurch gekennzeichnet, daß sie in Kombination induktive Schwingeinrichtungen, Einrichtungen zur Erzeugung eines periodischen Anregungssignales, das geeignet ist, in den induktiven Sender-Empfänger-Einrichtungen eine Überspannung zu erzeugen, Einrichtungen zur Messung der Veränderung der Amplitude des Signales, das an den Anschlußklemmen der induktiven Einrichtungen entsprechend der Anwesenheit eines teilweise leitfähigen Körpers, welcher in Nähe der induktiven Einrichtungen angeordnet ist, und Einrichtungen zur Verarbeitung umfaßt, um unmittelbar auf der Grundlage der Veränderung der Amplitude des Signales eine Charakteristik des teilweise leitfähigen Körpers zu bestimmen.

12. Vorrichtung nach Anspruch 11, dadurch gekennzeichnet, daß der Körper in dem Inneren der induktiven Einrichtungen angeordnet ist.

13. Vorrichtung nach Anspruch 11, dadurch gekennzeichnet, daß die induktiven Einrichtungen (1) eine Vorratsspule-Aufwickelspule umfassen.

14. Vorrichtung nach Anspruch 11, dadurch gekennzeichnet, daß die Vorratsspule-Aufwickelspule eine Doppelwicklung umfaßt, die es gestattet, im Inneren der Spule ein gleichmäßiges elektromagnetisches Feld zu erzeugen.

15. Verwendung gemäß einem der vorhergehenden Ansprüche bei der Charakterisierung eines Erdölabstromes, der aus wenigstens einer leitfähigen Phase, wie einer wässerigen Phase, und einer nicht-leitfähigen Phase zusammengesetzt ist.

**Claims**

1. A method for ascertaining a characteristic of a medium or a body having at least one conductive part, characterised in that :

   • an inductive resonant transmitter-receiver circuit is used, which is excited by a periodic excitation signal whose frequency value is selected so as to be essentially the same as the value of the tuning frequency of the resonant circuit or specific pulsation of the circuit,
   • the variation in the amplitude of the signal only is measured at the terminals of the said excited, inductive resonant circuit and
   • the amplitude variation measurement is used to detect the presence of the said partially conductive body.

2. A method for ascertaining a characteristic of a medium or body having at least one conductive part, characterised in that :

   • an inductive resonant transmitter-receiver circuit is used, which is excited by a periodic excitation signal whose frequency value is selected so as to be essentially the same as the value of the tuning frequency of the resonant circuit or specific pulsation of the circuit,
   • the variation in the amplitude of the signal only is measured at the terminals of the said excited, inductive resonant circuit and
   • the amplitude variation measurement is used to detect the presence of the said partially conductive body,
   • the variation in amplitude of the measured signal is used to detect a characteristic of the body containing at least one conductive part.

3. A method as claimed in claim 2, characterised in that the periodic excitation signal applied is a permanent signal.

4. A method as claimed in claim 2, characterised in that the periodic excitation signal applied consists of pulse trains of known durations.

5. A method as claimed in claim 2, applied to a body such as a fluid comprising a conductive phase of known volume and a non-conductive phase, characterised in that the average conductivity of the conductive phase is ascertained.

6. A method as claimed in claim 2, applied to a body such as a fluid comprising at least one conductive phase of a known conductivity and at least one non-conductive phase, characterised in that at least the volume of the conductive phase of the fluid is ascertained.

7. A method as claimed in claim 2, applied to a fluid made up of several phases, at least one of which is conductive, the said fluid being circulated in a pipe running at least partly in the vicinity of the inductive circuit, characterised in that the flow rate per unit volume of the conductive phase is determined.

8. A method as claimed in claim 7, characterised in that if the said phases of the fluid are of essentially the same flow velocities, the flow rate per unit volume of the fluid is determined.

9. A method as claimed in claim 2, characterised in that if the body is a fluid of known volume contained in a receptacle and at least a part of the fluid passes close to the said inductive circuit and the said fluid contains at least two liquid phases, one of these liquid phases being a conductive phase, the level of the conductive phase of the fluid in the said receptacle is determined.

10. A method as claimed in claim 2, characterised in that if the body is a fluid made up of two liquid phases in emulsion and the fluid is located at least partially in the vicinity of the said inductive circuit, the decanting time of the fluid is determined.

11. A device for implementing the method as claimed in one of the preceding claims, characterised in that it incorporates in combination inductive resonant means, means for generating an appropriate periodic excitation signal that will generate an overvoltage in the inductive transmitter-receiver means, means for measuring the variation in amplitude of the signal at the terminals of the inductive means due to the presence of a partially conductive body located in the vicinity of the inductive means, and processing means to apply the said variation in the signal amplitude as a means of directly deriving a characteristic of the partially conductive body.

12. A device as claimed in claim 11, characterised in that the said body is placed inside the inductive means.

13. A device as claimed in claim 11, characterised in that the inductive means (1) is a transmitter-receiver coil.

14. A device as claimed in claim 11, characterised in that the transmitter-receiver coil has a double winding so as to generate a uniform electromagnetic field inside the said coil.

15. Application as claimed in one of the preceding claims to the task of characterising a petroleum effluent consisting of at least one conductive phase such as an aqueous phase and a non-conductive phase.

FIG.1

FIG.2

FIG.3

FIG.4A

FIG.4B

**FIG.4C**

**FIG.4D**

**FIG.5**

**FIG.6**

12

**FIG.7**

**FIG.8**